# EUROPEAN PATENT APPLICATION

(11) **EP 2 437 547 A2**
(43) Date of publication of application: **04.04.2012**
(21) Application number: 11183356.2
(22) Date of filing: 29.09.2011
(51) Int. Cl.: H04W 36/14

(54) **Apparatus and method for performing handover between heterogeneous radio networks**

(30) Priority: 30.09.2010 GB 1016454; 30.08.2011 KR 20110087429
(71) Applicant: Samsung Electronics Co., Ltd., Suwon-si, Gyeonggi-do 442-742 (KR)
(72) Inventor: Hedge, Rajeev, 560093 Bangalore (IN); Azhapilli, Rajiv Rajan, 560093 Bangalore (IN)
(74) Representative: Jenkins, Richard Gavin

(57) **Abstract**

A method and system for performing a handover of a mobile device from a first wireless network to a second wireless network is provided, the mobile device being operably connected, via a tunnel, to a server of a Mobile Internet Protocol (IP) system, and to an information server coupled to the first wireless network and the second wireless network. The method includes transmitting, by the mobile device, a handover data packet to the information server via the tunnel, and transmitting, by the mobile device, the handover data packet to the information server via another route.

## Description

### BACKGROUND OF THE INVENTION

### 1. Field of the Invention

The present invention relates generally to an apparatus, system, and method associated with assisting a handover from one wireless network to another.

### 2. Description of Related Art

Users of mobile devices, such as telephones, notepad computers, tablet computers, etc., typically desire to connect to the Internet from a variety of different locations. Accordingly, a large network of publicly accessible Wi-Fi^{®} hot spots or Access Points (APs) have evolved. Especially in the case of mobile telephones, a user may travel between one AP and another while being connected to the Internet. For example, this commonly happens when a Voice over Internet Protocol (VoIP) call is being made or digital content, e.g., music or video, is being streamed. In other situations, a handover between different types of network can occur. For example, a data connection may be established using Wi-Fi^{®}, but then a handover to a cellular data system, such as 3G, may occur.

However, a handover between different APs, provided by different entities, can pose a problem in that the data connection to the Internet can be dropped during the handover process.

Accordingly, to assist in managing handovers, a system known as Media Independent Handover (MIH) has been developed, which manages the handover of a data connection between different wireless data networks, such as Wi-Fi^{®}, WiMax^{®}, 3G, or other cellular data networks, maintaining a connection with the Internet when a data connection changes during the handover.

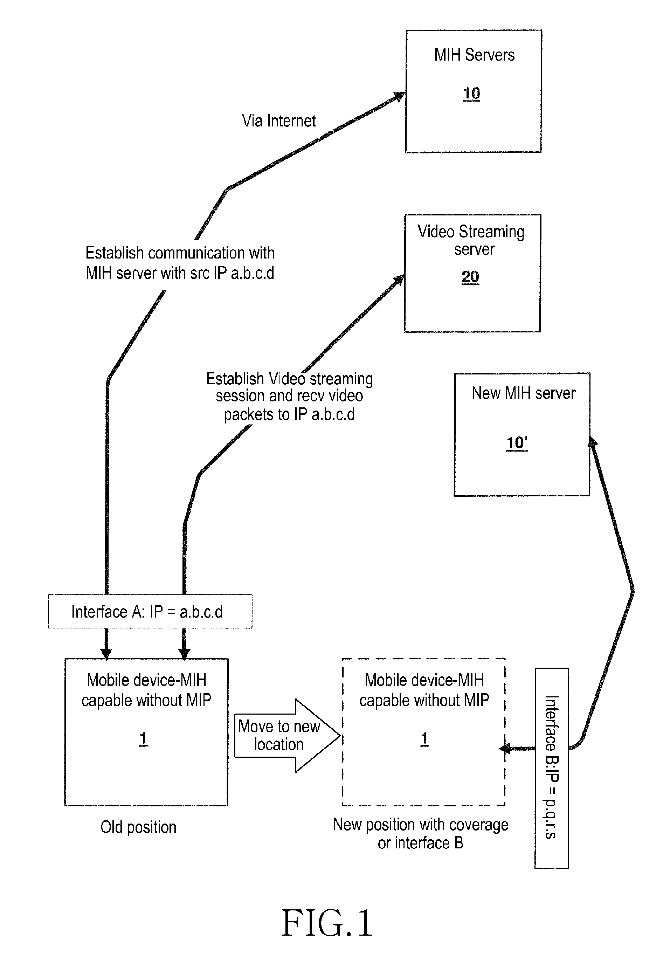

FIG. 1 illustrates a conventional MIH-enabled system.

Referring to FIG. 1, a mobile device 1 operating at a first location is assigned an IP address of a.b.c.d when connected via a wireless interface A. The mobile device 1 is MIH-capable, and therefore, conducts MIH communications with MIH server 10 over the interface A.

When connected via interface A, the user utilizes a video-streaming application, e.g., a web browser accessing YouTube^{®}. The web browser establishes a session with the video-streaming server 20 over the Internet. The video-streaming server 20 then continuously sends video data packets to the mobile device 1 over interface A, having the IP address a.b.c.d.

Because MIH is enabled, the mobile device 1 may, at some point, be directed to move to a different interface B, e.g., due to deteriorating signal conditions. The mobile device 1 is then assigned a new IP address p.q.r.s over the new interface B and performs registration over the new interface B. It is possible, but not necessary, that the new MIH server 10' is different from the previous one, i.e., MIH server 10, and in a new location.

However, a problem with MIH is that it does not maintain the IP address of the mobile device 1. Accordingly, in a situation as described above, connection with the video streaming server 20 is lost due to the change in IP address from a.b.c.d to p.q.r.s. This is an annoyance to the user, who must then re-establish the session with the video-streaming server 20.

Accordingly, a system to address this problem, known as Mobile IP (MIP), as defined in RFC3344, has been developed, which provides a single IP address to the mobile device via a tunneling mechanism over heterogeneous radio interfaces.

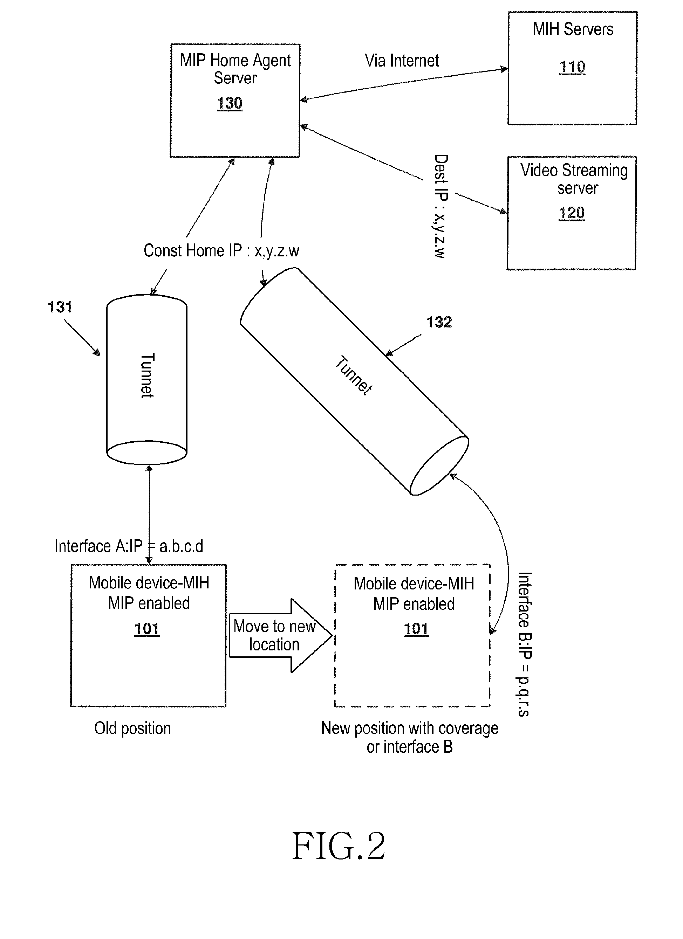

FIG. 2 illustrates a conventional system utilizing MIH and MIP. Specifically, FIG. 2 illustrates a Mobile IP server that uses a data tunnel for communication with a mobile device, associating a fixed (or constant) IP address with the mobile device.

Referring to FIG. 2, a mobile device 101, which is MIP and MIH enabled, is connected via a wireless interface A to MIP Home Agent (HA) server 130 and then on to the Internet and MIH servers 110. By using the MIP HA server 130, the mobile device 101 is associated with a fixed home IP address x.y.z.w, even though its actual IP address may change as the mobile device 101 moves between networks. Data packets destined for the mobile device 101 are delivered to the constant IP address and re-routed by the MIP HA server 130, which is always aware of the actual IP address of the mobile device 101.

The mobile device 101 is connected via tunnel 131 to MIP HA server 130. The mobile device is connected to a video streaming server 120, which streams video to the fixed IP address x.y.z.w. The video streaming server 120 does not know or need to know the actual IP address of the mobile device 101, as the MIP HA server 130 re-directs all data packets to the mobile device 101.

When the mobile device 101 moves to a new location, it is handed over to a new interface B. For example, the new interface B may be a cellular data interface provided by a 3G system. The actual IP address of the mobile device changes from a.b.c.d to p.q.r.s, but data packets are routed via new tunnel 132, setup by the MIP HA server 130. Because the fixed IP address x.y.z.w of the mobile device 101 has not changed, data packets from the video streaming server 120 still reach the mobile device 101 and the user does not notice any deterioration in performance of the mobile device 101 due to the handover.

However, a problem in a system with MIP and MIH is that during a handover, the MIP HA server transmits packets on an old interface for a period of time until the MIP tunnel is correctly established. During this period, a high level of packet loss may occur.

A further problem is that a handover typically occurs due to a decline in signal strength. In conventional systems, however, the MIP tunnel needs to be stable before MIH messages can pass through it. Accordingly, handover can take longer than is desirable.

### SUMMARY OF THE INVENTION

Accordingly, the present invention has been made to solve the above―mentioned problems occurring in the prior art, and to provide at least the advantages described below.

In accordance with an aspect of the present invention, a method of performing a handover of a mobile device from a first wireless network to a second wireless network is provided, the mobile device being operably connected, via a tunnel, to a server of a Mobile Internet Protocol (IP) system, and to an information server coupled to the first wireless network and the second wireless network. The method includes transmitting, by the mobile device, a handover data packet to the information server via the tunnel, and transmitting, by the mobile device, the handover data packet to the information server via another route.

In accordance with another aspect of the present invention, a mobile device is provided that communicates with a first wireless network and a second wireless network, the mobile device being operably connected, via a tunnel, to a server of a Mobile Internet Protocol (IP) system, and to an information server coupled to the first wireless network and the second wireless networks. The mobile device includes a controller for controlling the mobile device to perform a handover from the first wireless network to the second wireless network, and a transceiver for transmitting a handover data packet to the information server via the tunnel, and transmitting the handover data packet to the information server via another route.

In accordance with another aspect of the present invention, a method of performing a handover of a mobile device from a first wireless network to a second wireless network is provided, the mobile device being operably connected, via a tunnel, to a server of a Mobile Internet Protocol (IP) system and to an information server coupled to the first wireless network and the second wireless network. The method includes determining, by the mobile device, that the handover is imminent or in progress, buffering data packets to be transmitted from the mobile device, and transmitting buffered data packets such that buffered handover data packets are transmitted with priority over buffered application data packets.

In accordance with another aspect of the present invention, a mobile device is provided that communicates with a first wireless network and a second wireless network, the mobile device being operably connected, via a tunnel, to a server of a Mobile Internet Protocol (IP) system, and to an information server coupled to the first wireless network and the second wireless network. The mobile device includes a controller that determines that a handover from the first wireless network to the second wireless network is imminent or in progress, a memory that buffers data packets to be transmitted from the mobile device, and a transceiver that transmits the buffered data packets such that buffered handover data packets are transmitted with priority over buffered application data packets.

In accordance with another aspect of the present invention, a method of performing a handover of a mobile device from a first wireless network to a second wireless network is provided, the mobile device being operably connected, via a tunnel, to a server of a Mobile Internet Protocol (IP) system and to an information server coupled to the first wireless network and the second wireless network. The method includes determining, by the server, that the handover is imminent or in progress, buffering, by the server, handover data packets to be transmitted, when the handover is imminent or in progress, and transmitting, by the server, the handover data packets to the mobile device.

In accordance with another aspect of the present invention, a server of a Mobile Internet Protocol (IP) system is provided, the server being operably coupled to a mobile device via a tunnel, the mobile device being operably connected to an information server coupled to a first wireless network and a second wireless network. The server includes a controller for determining that a handover is imminent or in progress, a memory for buffering handover data packets to be transmitted, when the handover is imminent or in progress, and a transceiver for transmitting the handover data packets to the mobile device.

### BRIEF DESCRIPTION OF THE DRAWINGS

The above and other aspects, features, and advantages of various embodiments of the present invention will be more apparent from the following description taken in conjunction with the accompanying drawings, in which:
FIG. 1 illustrated a conventional system utilizing MIH;
FIG. 2 illustrates a conventional system utilizing MIH and MIP;
FIG. 3 illustrates a system utilizing MIH and MIP according to an embodiment of the present invention;
FIG. 4 is a flowchart illustrating a method for sending a transmit message according to an embodiment of an aspect of the present invention;
FIG. 5 is a flowchart illustrating a method for packet transmission according to an embodiment of an aspect of the present invention;
FIG. 6 is a block diagram illustrating a mobile device according to an embodiment of the present invention; and
FIG. 7 is a block diagram illustrating an MIP server according to an embodiment of the present invention.

### DETAILED DESCRIPTION OF EMBODIMENTS OF THE INVENTION

Various embodiments of the present invention will be described in detail with reference to the accompanying drawings. In the following description, specific details such as detailed configuration and components are merely provided to assist the overall understanding of various embodiments of the present invention. Therefore, it should be apparent to those of ordinary skill in the art that various changes and modifications of the embodiments described herein can be made without departing from the scope and spirit of the invention. In addition, descriptions of well-known functions and constructions are omitted for clarity and conciseness.

Herein below, several techniques according to embodiments of the present invention are provided for addressing problems experienced during handover in these circumstances, as described above. It should be noted that the individual solutions may be employed alone or, where appropriate, combined.

Additionally, it should be noted that in the various embodiments of the invention that follow, the basic hardware requirements of the system (i.e., a mobile device and fixed network elements) may be the same as those in the prior art. The method of operation will vary as described. Further, use of the same hardware, modified in its operation, assists in ensuring backward compatibility with conventional devices. The modification to known hardware can be achieved by suitable programming or by the provision of suitable custom hardware.

In accordance with an embodiment of the present invention, data packets can be passed between the Internet and an MIP and MIH enabled mobile device, e.g., via an MIP data tunnel because the actual device IP address is known by the MIH server. If the actual device IP address is not known, then MIH discovery procedures can be used to locate the server.

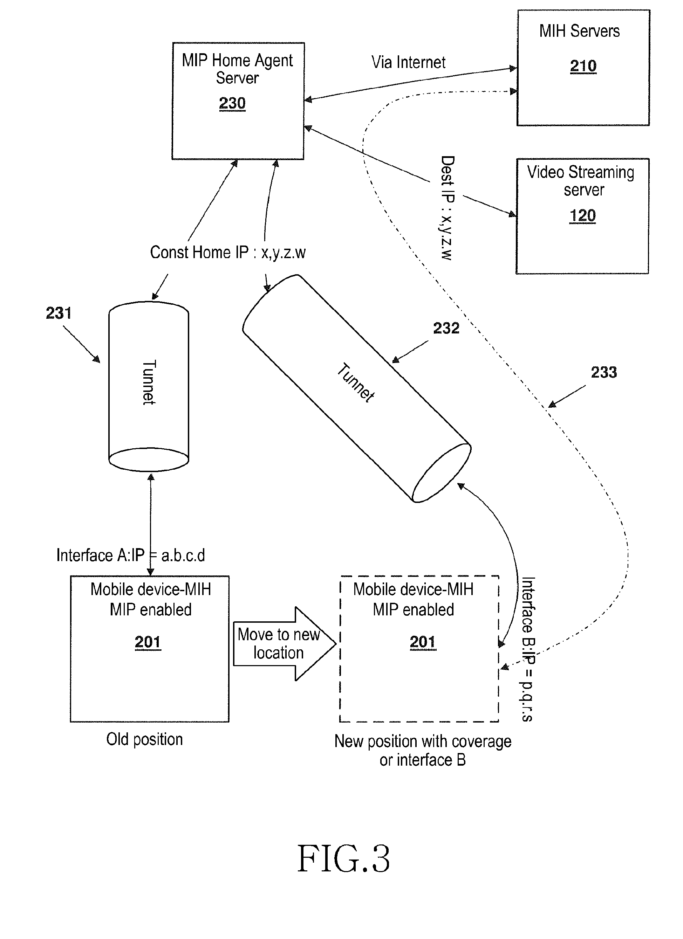

FIG. 3 illustrates a system utilizing MIH and MIP according to an embodiment of the present invention. Specifically, FIG. 3 illustrates a basic system configuration, which differs from that illustrated in FIG. 2 in that a separate communication route is established between a mobile device and an MIH server.

Referring to FIG. 3, the system includes a mobile device 201, an MIP HA server 230, an MIH server 210, and a video streaming server 120.

In the system illustrated in FIG. 3, MIH message packets can additionally be sent to the MIH server 210 by a route outside data tunnel 231, and therefore, the handover process is not entirely dependent on an MIP data tunnel being completely established to achieve handover. Accordingly, in addition to transmitting via an MIP tunnel 232, the mobile device 201 transmits MIH handover messages to the MIH server 210 via a separate communication route 233, which does not use the MIP tunnel 232.

Although FIG. 3 illustrates the mobile device 201 transmitting directly to the MIH server 210 via the separate communication route 233, the separate communication route 233 may also indirectly reach the MIH server 210, i.e., pass via any other intermediary device, such as a different server or router.

Whichever device responds first, i.e., either the MIP HA server 230 or the MIH server 210, will give an indication of the status of the handover process. Subsequent responses may be ignored as redundant.

When the MIP HA server 230 completes the tunnel 232 construction faster than the MIH server 210 can complete the handover, then the MIH clientinitiates a new communication sequence with MIH MM and IS servers, through the tunnel 232 just created on the new radio interface. The handover is considered complete when the MIH client exchanges all messages as required by an MIH protocol and the MIP tunnel 232 is established.

If the MIH server 210 cannot complete the handover, then the attempted handover is deemed to have failed, which results in a failure procedure being started.

In the failure procedure, a handover is attempted on a next preferred radio link. The failure procedure also involves re-establishing an MIP tunnel on the old radio interface and possibly further communication with the MIH servers over the old radio link. These steps are very similar to the handover process itself. If these steps fail, then the mobile device 201 will lose connectivity with the servers and any attempt to recover will be similar to normal mobile device power-on procedures.

When the MIH server 210 completes communication via the separate communication route 233 before the MIP tunnel 232 can be created, then the main thread of the application enters a wait state, awaiting MIP registration with the MIP HA server 210 and the tunnel 232 to be complete. If MIP registration is not possible over the new radio interface, then the mobile device 201 may abandon the new radio interface and attempt a new handover to the next preferred radio interface or may continue on the current interface in an idle mode with connectivity only to the MIH server 210 (and not the MIP HA server 230). This ensures continuous connectivity, but not a constant IP address, meaning that some applications will either not function or will function with a reduced feature set.

However, if MIP registration completes successfully, the MIH client may choose to re-register with the MIH server 210 again through the tunnel 232 established with the MIP HA server 230. This enables messages to be transferred via a single route and avoids unnecessary duplication. Applications can then run on the mobile device 201 with full IP transparency.

By making use of this active redundancy in message transfer, a more robust and reliable handover may be achieved, resulting in an enhanced user experience.

According to another embodiment of the present invention, buffering is used to provide additional data security during a handover. For example, data buffering is performed on a server side, i.e., a server-side solution, or on a device side, i.e., a device-side solution.

In the server-side solution, an MIP HA server, which, in conventional systems, merely passes data packets to an intended mobile device without examining them further, seeks out MIH packets in the data traffic, which are destined for a particular user. Specifically, the MIP HA server looks for a distinctive MIH signature within data packets by "sniffing" MIH packet headers to search for MIH handover related messages (e.g., a candidate query/commit message). Detection of such handover related messages triggers the buffering activity, and any subsequent packets are stored as well as transmitted in the normal way.

The initiation of the buffering starts a timer, and ongoing buffering continues for a defined period of time. The period of time is selected to suit particular cases, in the assumption that handover is imminent. The timer is used, because the handover may yet fail, meaning that no new messages appear on the link. The timer duration can be selected in light of a server's ability to buffer, which may depend on an overall network load and/or how many other handovers are in progress. In the event that few active handovers are in place, then more buffer space can be allocated. For example, a typical buffer period may be 5 minutes, although this may be increased or decreased, as per a particular instance.

If the MIP HA server receives a new registration message on a new link from a new "Care of" address from the same user, then a timer is started and runs for a predetermined period. At the expiry of the timer, the packets in the buffer are sent to an HA encapsulation engine, which sends them to the mobile device. The HA encapsulation engine packages up individual datagrams for sending to the mobile device's "care of" address.

No further changes are required to the HA encapsulation engine and any other packets received at the MIP HA server that are to be transmitted to the mobile device will be handled as normal.

By buffering data packets for a particular user in this way, if there is a problem encountered during a handover, the data packets are not lost and can be re-transmitted to the user as necessary. In the absence of buffering at the MIP HA server, then any data packets destined for a particular user can be lost during handover, if the handover process is problematic for any reason.

When a handover completes successfully, the buffered data packets can be discarded, and ongoing communications with the device can continue as usual.

In the device-side buffering solution, a different approach is adopted.

During conventional handovers, an MIP tunnel is first broken on an old radio link and then re-created on a new radio link to an MIP HA server. During this period, packet loss for packets transmitted via the tunnel can be considerably higher than at other times. Also, conventionally, all data packets sent via the tunnel are treated and transmitted with equal priority.

Typically, applications running on a mobile device that require a constant connection to the Internet are relatively robust with respect to packet loss and often incorporate a buffer of their own to accommodate a temporary loss or deterioration in connection. During handover, it is found that MIH packets, which are relatively infrequent compared to the application data packets, are more important in terms of ensuring link stability and reliability. Therefore, in accordance with an embodiment of the present invention priority is given to MIH data packets over application data packets.

The application running on the mobile device is better able to cope with missing application data packets than it is with missing MIH data packets, without which the link may be lost completely, thereby possibly killing the application which may rely on a continuous connection. It is therefore in the interest of the application that a handover is completed and a new link is quickly established so that application data packets can once more pass promptly.

In accordance with an embodiment of the present invention, in order to prioritize the MIH packets, two buffers are created in a mobile device. The first buffer is for MIH data packets and the second is for application data packets. The two buffers are then operated such that when the MIH data packet buffer is empty, then data may be sent from the application data buffer. As such, priority is given to MIH data packets over application data packets.

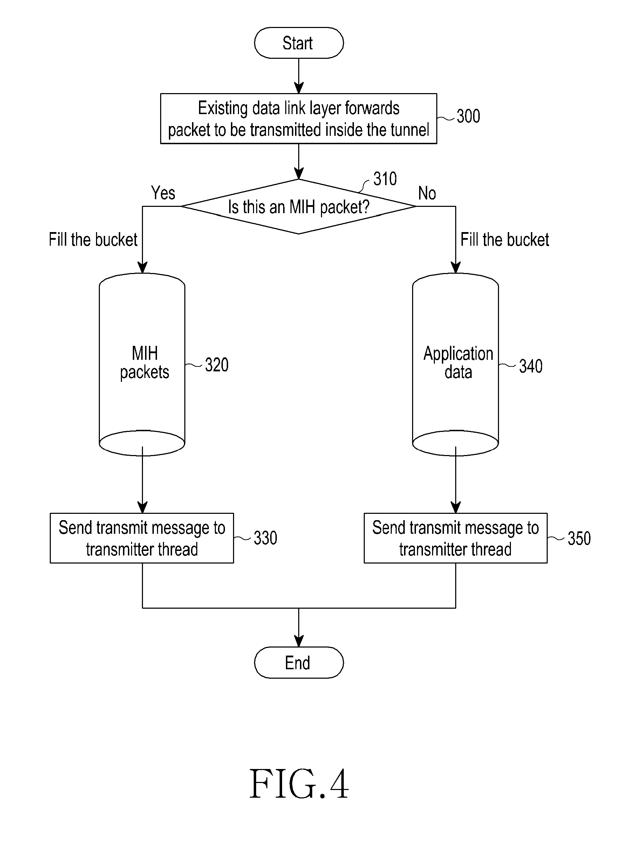

FIG. 4 is a flowchart illustrating a method for sending a transmit message by a mobile device according to an embodiment of an aspect of the present invention. Specifically, FIG. 4 illustrates a method identifying MIH data packets and application data packets for transmission.

Referring to FIG. 4, in step 300, an existing data link layer forwards a packet to be transmitted via a tunnel. In step 310, the mobile device determines whether the packet is an MIH packet. If the packet is not an MIH packet and is therefore, an application data packet, the packet is added to the application data packet buffer (or bucket) in step 340. In step 350, a transmit message is sent to a transmitter thread to indicate that there is a packet for transmission.

However, when the mobile device determines that the packet to be transmitted is an MIH packet in step 310, the packet is added to an MIH packet buffer (or bucket) in step 320.

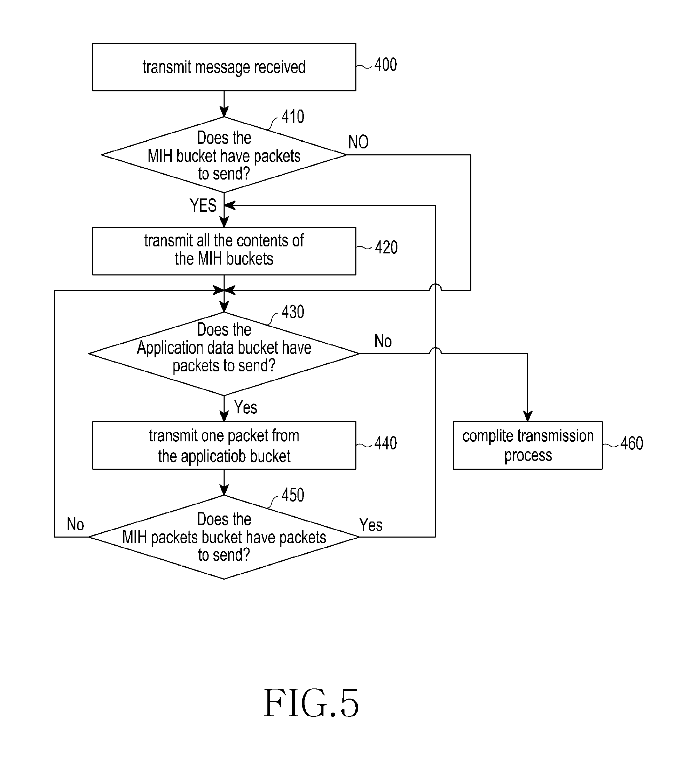

FIG. 5 is a flowchart illustrating a method for packet transmission according to an embodiment of an aspect of the present invention. Specifically, FIG. 5 illustrates a method wherein priority is given to MIH data packets over application data packets, such that packets from the application data buffer are transmitted when the MIH packet buffer is empty.

Referring to FIG. 5, in step 400, a transmit message is received. In step 410, the mobile device checks a status of the MIH packet buffer. If there are packets in the MIH packet buffer to send, the entire contents of the MIH packet buffer are transmitted in step 420.

However, when there are no packets in the MIH packet buffer to send in step 410 or after transmitting the entire contents of the MIH packet buffer in step 420, the mobile device checks whether there are any packets to transmit in the application data buffer in step 430. If there are packets to transmit in the application data buffer, then one of the packets is transmitted in step 440. If there is no application data packet in the application data buffer, the mobile device completes a transmission process in step 460.

In step 450, the mobile device checks the packet MIH buffer to determine if it includes new MIH packets to transmit. If there are new MIH packets to transmit, then step 420 is repeated before another packet from the application data buffer is transmitted in step 440.

However, if there are no new MIH packets to transmit in step 450, then the method returns to step 430 to determine if there are application data packets in the application data buffer.

Similarly, if there are no MIH packets in the buffer in step 410, then method proceeds directly to step 430.

As described above with reference to FIG. 5, priority is given to MIH packets over application data packets, ensuring that the handover process has priority over any applications running on the mobile device at the time of a handover.

Although described above in relation to buffering data packets on the client-side, it is clear that applying a similar technique at the server-side also yields benefits, by ensuring that MIH or handover packets are prioritized over application data packets. While this prioritization may be applied at the server-side, the client-side or both, as required, maximum benefit is obtained by applying it at both.

Of course, the size of one or both buffers can be dynamically varied to give more or less priority to either type of data packet.

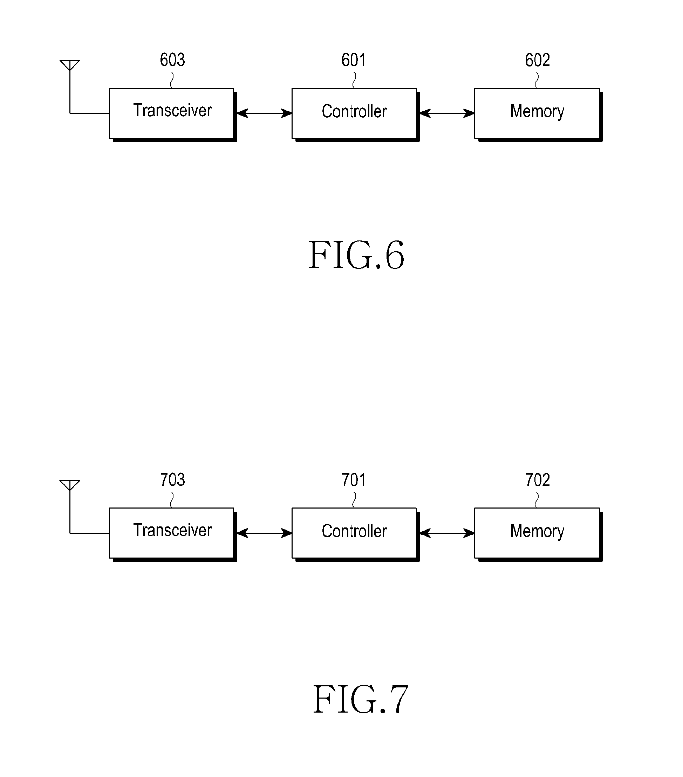

FIG. 6 is a block diagram illustrating a mobile device according to an embodiment of the present invention.

Referring to FIG. 6, the mobile device includes a controller 601, a memory 602, and a transceiver 603. The controller 601 controls the overall operations of the mobile device as described in the embodiments above. The memory 602 stores programs for controlling the mobile device and includes buffers for buffering MIH packets and application data packets. The transceiver 603 communicates with MIP and MIH servers.

FIG. 7 is a block diagram illustrating an MIP server according to an embodiment of the present invention.

Referring to FIG. 7, the MIP server includes a controller 701, a memory 702, and a transceiver 703. The controller 701 controls the overall operations of the MIP server as described in the embodiments above. The memory 702 stores programs for controlling the MIP server and includes buffers for buffering MIH packets and application data packets. The transceiver 703 communicates with mobile devices, video streaming servers, and MIH servers.

At least some elements discussed herein may be constructed, partially or wholly, using dedicated special-purpose hardware. Terms such as "component", "module" or "'unit" used herein may include, but are not limited to, a hardware device, such as a Field Programmable Gate Array (FPGA) or Application Specific Integrated Circuit (ASIC), which performs certain tasks.

Various embodiments of the present invention may be implemented in conjunction with modules, including functions, procedures, data structures, and application programs, for performing tasks, or defining abstract data types or low-level hardware contexts. Machine-readable instructions stored on any of the above-mentioned storage media may be executable by a processor in a mobile device or a server. For example, a computer program may include machine-readable instructions capable of managing capabilities of the mobile device or server. For example, the program may be included on a Compact Disc-ROM (CD-ROM) and loaded from the CD-ROM to a hard drive in the non-volatile memory. The machine-readable instructions may cause the mobile device or server to operate according to the various embodiments of the present invention.

At least some elements may be may be configured to reside on an addressable storage medium and be configured to execute on one or more processors. That is, the elements may be implemented in the form of a tangible computer-readable storage medium having recorded thereon instructions that are, in use, executed by a computer or other suitable device. The elements may include, by way of example, components such as software components, object-oriented software components, class components, and task components, processes, functions, attributes, procedures, subroutines, segments of program code, drivers, firmware, microcode, databases, data structures, tables, arrays, and variables. The tangible medium may take any suitable form, but examples include solid-state memory devices (e.g., Read Only Memories (ROM), Random Access Memories (RAM), Electrically Programmable ROM (EPROM), Electrically Erasable Programmable ROM (EEPROM), etc.), optical discs (e.g. Compact Discs, DVDs, and others), magnetic discs, magnetic tapes and magneto-optic storage devices.

The example embodiments have been described with reference to the example components, modules and units discussed herein. Where appropriate, these functional elements may be combined into fewer elements or separated into additional elements. In some cases the elements are distributed over a plurality of separate computing devices that are coupled by a suitable communications network, including any suitable wired networks or wireless networks.

While the present invention has been described above with reference to various embodiments thereof, it is understood by those of ordinary skill in the art that various changes in form and detail may be made therein without departing from the spirit and scope of the present invention as defined by the appended claims, and their equivalents.

## Claims

1. A method of performing a handover of a mobile device from a first wireless network to a second wireless network, the mobile device being operably connected, via a tunnel, to a server of a Mobile Internet Protocol (IP) system, and to an information server coupled to the first wireless network and the second wireless network, the method comprising the steps of:
transmitting, by the mobile device, a handover data packet to the information server via the tunnel; and
transmitting, by the mobile device, the handover data packet to the information server via another route.

2. The method of claim 1, wherein transmitting the handover data packet to the information server via the another route comprises transmitting the handover data packet directly to the information server, using an IP address of the mobile device.

3. The method of claim 1 or 2, wherein the handover data packet indicates that handover is complete.

4. A mobile device that communicates with a first wireless network and a second wireless network, the mobile device being operably connected, via a tunnel, to a server of a Mobile Internet Protocol (IP) system, and to an information server coupled to the first wireless network and the second wireless networks, the mobile device comprising:
a controller for controlling the mobile device to perform a handover from the first wireless network to the second wireless network; and
a transceiver for transmitting a handover data packet to the information server via the tunnel, and transmitting the handover data packet to the information server via another route.

5. A tangible computer readable recording medium having recorded thereon instructions which, when executed, cause a computer to perform a method according to any of claims 1 to 4.

6. A method of performing a handover of a mobile device from a first wireless network to a second wireless network, the mobile device being operably connected, via a tunnel, to a server of a Mobile Internet Protocol (IP) system and to an information server coupled to the first wireless network and the second wireless network, the method comprising the steps of:
determining, by the server, that the handover is imminent or in progress;
buffering, by the server, handover data packets to be transmitted, when the handover is imminent or in progress; and
transmitting, by the server, the handover data packets to the mobile device.

7. The method of claim 6, further comprising:
buffering application data packets to be transmitted, when the handover is imminent or in progress.

8. The method of claim 6 or 7, wherein the server determines that the handover is imminent or in progress by inspecting data packets to determine a presence of the handover data packets.

9. A server of a Mobile Internet Protocol (IP) system, the server being operably coupled to a mobile device via a tunnel, the mobile device being operably connected to an information server coupled to a first wireless network and a second wireless network, the server comprising:
a controller for determining that a handover is imminent or in progress;
a memory for buffering handover data packets to be transmitted, when the handover is imminent or in progress; and
a transceiver for transmitting the handover data packets to the mobile device.

10. A tangible computer readable recording medium having recorded thereon instructions which, when executed, cause a computer to perform a method according to any of claims 6 to 9.
